# EUROPÄISCHE PATENTSCHRIFT

(11) **EP 1 186 139 B1**
(45) Veröffentlichungstag und Bekanntmachung des Hinweises auf die Patenterteilung: **01.06.2005**
(21) Anmeldenummer: 00949101.0
(22) Anmeldetag: 14.06.2000
(51) Int. Cl.: H04L 12/56, H04L 12/28

(54) **KOMMUNIKATIONSSYSTEM**
COMMUNICATION SYSTEM
SYSTEME DE COMMUNICATION

(30) Priorität: 15.06.1999 DE 19927302
(43) Veröffentlichungstag der Anmeldung: 13.03.2002
(73) Patentinhaber: SIEMENS AKTIENGESELLSCHAFT, 80333 München (DE)
(72) Erfinder: SOKOL, Joachim, D-82008 Unterhaching (DE); PILGER, Alexander, D-82054 Sauerlach (DE)
(86) Internationale Anmeldenummer: PCT/DE2000/001948
(87) Internationale Veröffentlichungsnummer: WO 2000/077998

(56) Entgegenhaltungen:
- EP-A- 0 790 751
- BAUMGARTNER F ET AL: "Differentiated services: a new approach for quality of service in the Internet" HIGH PERFORMANCE NETWORKING. IFIP TC-6 EIGHTH INTERNATIONAL CONFERENCE ON HIGH PERFORMANCE NETWORKING (HPN'98), PROCEEDINGS OF EIGHTH INTERNATIONAL CONFERENCE ON HIGH PERFORMANCE NETWORKING, VIENNA, AUSTRIA, 21-25 SEPT. 1998, Seiten 255-273, XP002159615 1998, Norwell, MA, USA, Kluwer Academic Publishers, USA ISBN: 0-412-84660-8

## Beschreibung

Die Erfindung betrifft ein Kommunikationssystem.

Ein Kommunikationssystem ist z.B. in Form des Internet bekannt. Dort tauschen eine Vielzahl von Rechnern über ein Kommunikationsnetz (Netzwerkverbund) Informationen aus. Um Zugang zum Internet zu erlangen, sind für einen Rechner insbesondere bestimmte Einrichtungen (Hard-/Software) notwendig. Beispielsweise kann über eine Telefonleitung (a/b-Schnittstelle oder ISDN) mittels eines Modems oder eines ISDN-Adapters in Verbindung mit geeigneter Software ein Diensteanbieter im Internet angewählt und mittels Zugang über diesen Diensteanbieter mit dem Internet kommuniziert werden. Um Zugang über den Diensteanbieter ins Internet zu erlangen, gibt der Benutzer insbesondere eine Zugangskennung an, nach deren Verifikation ihm (grundsätzlich) das Internet nach offensteht. Dabei geschieht die Kommunikation über eine definierte Verbindung mit meist stark variierender Güte.

Dabei ist es von Nachteil, daß der Diensteanbieter keinerlei individuelle Einstellung für den einzelnen Benutzer vornehmen kann. So ist es beispielsweise nicht möglich, gezielt bestimmte Dienste für einen Benutzer dezentral abzufragen und zu beeinflussen.

Die **Aufgabe** der Erfindung besteht darin, ein Kommunikationssystem anzugeben, bei dem eine dezentrale Administration von Dienstgütemerkmalen in einem Rechner des Benutzers ermöglicht wird.

Diese Aufgabe wird gemäß den Merkmalen des Anspruchs 1 gelöst. Weiterbildungen der Erfindung ergeben sich auch aus den abhängigen Ansprüchen.

Zur Lösung der Aufgabe wird ein Kommunikationssystem angegeben, bei dem ein erster Rechner vorgesehen ist, der an einem Netzwerk angeschlossen ist. Der erste Rechner weist eine Zugangseinheit auf, anhand derer vorgegebene Dienstgütemerkmale für eine Interaktion mit dem Netzwerk bestimmt sind. Ein zweiter Rechner ist vorgesehen, der ebenfalls an das Netzwerk angeschlossen ist und der die Dienstgütemerkmale der Zugangseinheit administriert.

Bevorzugt ist der erste Rechner ein Endgerät eines Benutzers und der zweite Rechner ist insbesondere eine Einheit eines Diensteanbieters. Somit erhält der Diensteanbieter die Möglichkeit, gezielt Dienstgütemerkmale (engl.: "Quality of Service", QoS) bei dem Benutzer zu administrieren, d.h. insbesondere freizuschalten, zu sperren, zu verändern, hinzuzufügen.

Gerade bei einer Übertragung von Sprachdaten, Bildern und Bewegtbildern ist es ein großer Vorteil, bspw. die Güte des Kanals in der Zugangseinheit zu überwachen. Haben der Benutzer und der Diensteanbieter vereinbart, Daten in einem Umfang von 5MB über eine höherwertige Verbindung zu übertragen, so wird bei Daten, die oberhalb der 5MB-Grenze liegen, eine qualitativ niederwertige Verbindung benutzt. Um diese Vereinbarung während des Zugriffs auf der Seite des Diensteanbieters zu kontrollieren, entsteht zunächst die Netzlast für die höherwertige Verbindung auch oberhalb der vereinbarten 5MB. Eine Zurückweisung des sechsten Megabytes erfolgt bei dem Diensteanbieter nachdem das sechste Megabyte bereits die höherwertige Verbindung belastet hat. Durch das hier vorgestellte Kommunikationsnetz kann durch Regelung der Übertragung in der Zugangseinheit am Ort des Benutzers das sechste Megabyte automatisch mit der niederwertigen Verbindung übertragen werden. Es entsteht gar nicht erst die nichtvereinbarte Belastung des nicht vereinbarten sechsten Megabytes auf der höherwertigen Verbindung.

Dieses Szenario ist eine beispielhafte Ausführung zu einer möglichen Nutzung der Zugangseinheit durch den Diensteanbieter. Hierbei sei angemerkt, daß in dem Beispiel von (zumindest) zwei qualitativ unterschiedlichen Verbindungen ausgegangen wird. Damit ist gemeint, daß entsprechend einer Dienstgüte unterschiedliche Datenraten möglich sind. Mit dem Diensteanbieter sind zweckmäßig unterschiedliche Kosten für die qualitativ unterschiedlichen Verbindungen vereinbart. Gerade für Echtzeitanwendungen, z.B. Bildtelefonie, kann es zweckmäßig sein, eine höhere Bandbreite bereitzuhalten um somit die Funktionsfähigkeit der Echtzeitanwendung zu gewährleisten.

Die Stelle in dem Kommunikationsnetz, an der die getroffenen Vereinbarungen zwischen dem Diensteanbieter und dem Benutzer (bzw. seinem Rechner) kontrolliert wird, wird auch als Policy Enforcement Point (PEP) bezeichnet.

Ferner sei angemerkt, daß in der Zugangseinheit Daten bezüglich der Dienstgütemerkmale abgespeichert sein können oder alternativ über das Kommunikationsnetz von dem Diensteanbieter, gegebenenfalls zur Laufzeit, abgerufen werden können. Ein Beispiel für solch eine dynamische Abfrage ist eine Zugangskontrolle (Authentifikation). Dabei kann die Zugangseinheit selbst über ein vorgegebenes Datenaustauschprotokoll mit dem zweiten Rechner (des Diensteanbieter) kommunizieren und die geeigneten Daten abrufen.

Eine Weiterbildung besteht darin, daß in der Zugangseinheit eine Umsetzung von einem ersten (Kommunikations)Protokoll in ein zweitens (Kommunikations)Protokoll erfolgt. Insbesondere für den Fall, daß die Zugangseinheit als ein eigenes Gerät ausgeführt ist, wird zwischen dem ersten Rechner des Benutzers und der Zugangseinheit z.B. ein Reservierungsprotokoll RSVP (= Ressource Reservierungsprotokoll) eingesetzt, das bei Anwendung innerhalb des Kommunikationsnetzes zu einer großen Netzbelastung führen würde. Daher wird zweckmäßig das Reservierungsprotokoll RSVP in der Zugangseinheit für den Benutzer transparent in einen geeigneten und in dem Kommunikationsnetz etablierten Mechanismus zur Reservierung (z.B. DiffServ = Differentiated Services) umgesetzt. Generell können auf diese Weise eine Vielzahl von netzspezifischen Umsetzungen vorgenommen werden, wobei insbesondere in dem Kommunikationsnetz anwendbare Protokolle berücksichtigt werden können.

Ferner ist es von Vorteil, daß die Anbindung der Zugangseinheit an den ersten Rechner unproblematisch und vielseitig ist. So kann bspw. eine Anbindung über eine serielle Schnittstelle oder eine USB-Schnittstelle (USB = Universal Serial Bus) eines handelsüblichen Personalcomputers erfolgen. über diese Schnittstelle werden zwischen dem ersten Rechner und der Zugangseinheit Daten ausgetauscht. Welche Umsetzung in welchen Protokollstandard jenseits dieser Schnittstelle in der Zugangseinheit selbst vorgenommen werden, sind für den Benutzer unsichtbar, d.h. er muß sich nicht um derartige Details kümmern. Diese können insbesondere von dem Diensteanbieter dynamisch oder statisch in der Zugangseinheit administriert werden.

Eine andere Weiterbildung besteht darin, daß das Netzwerk das Internet ist.

Auch ist es eine Ausgestaltung, daß die Zugangseinheit als eine der folgenden Möglichkeiten ausgeführt ist:
a) eigenständiges Gerät:
   In Form eines eigenständigen Geräts kann der Diensteanbieter mit hoher Wahrscheinlichkeit sicherstellen, daß eine betrügerische Manipulation der Zugangseinheit ausgeschlossen ist. Insbesondere können konstruktive Maßnahmen (z.B. Vergießen oder Plombieren des Gehäuses) getroffen werden, die eine Manipulation erheblich erschweren. Bei der eigenständigen Lösung ist es insbesondere von Vorteil, wenn die Zugangseinheit eine eigene Prozessoreinheit mit zugehöriger Software aufweist. Somit können eine Vielzahl von Funktionalitäten, z.B. eine eigenständige Kommunikation der Zugangseinheit mit dem Diensteanbieter oder ein automatischer Abgleich von Parametern durchgeführt werden.
b) Einschubvorrichtung:
   Unter einer Einschubvorrichtung ist z.B. eine Steckkarte für einen Personalcomputer zu verstehen. Solch eine Steckkarte umfaßt eine Vielzahl elektronischer Schaltkreise (Hardware), die "sicherer" sind als bloße Software. Allerdings ist die Hardware im Rechner des Benutzers und damit nicht mehr im direkten Einflußbereich des Diensteanbieters.
c) Softwarelösung:
   Prinzipiell ist es auch möglich, die Funktionalität der Zugangseinheit in Form von Software zu realisieren. Dabei ist allerdings erhöhtes Augenmerk zu richten auf die Sicherheit und Authentizität der Software. Läuft die Software auf dem Rechner des Benutzers, so kann sie prinzipiell leicht manipuliert werden. Allerdings ist ein fälschungssicherer Betrieb der Zugangseinheit für sicherheitsrelevante bzw. kostenrelevante Anwendungen maßgeblich. Gegebenenfalls ist durch geeignete Authentizitätsmechanismen der Software deren Originalität zu gewährleisten.

Es gibt eine Vielzahl möglicher Dienstgütemerkmale. Eine nicht abschließende Auswahl stellt die folgende Übersicht dar:
a) Bandbreite:
   Ein wichtiger Aspekt für die Güte eines Dienstes ist die zur Verfügung stehende Bandbreite. Besonders für echtzeitrelevante Anwendungen (Bewegtbilder, Sprache, etc.) ist ein kontinuierlicher Datenstrom von großer Bedeutung. Hingegen kann ein Abruf von Daten aus dem Internet (z.B. Download von Programmen) auch mit geringer Bandbreite noch voll funktionieren, einzig die Zeidauer für den Abruf ist bei niedriger Bandbreite hoch. Die Einführung von Dienstgütemerkmalen in ein Szenario wie das Internet ermöglicht eine selektive Anforderung/Vergabe von Bandbreite, es gibt demnach unterschiedlich "gute" Verbindungen.
b) Verzögerung (Delay):
   Ein weiterer wichtiger Punkt ist die Zeitverögerung bis zum Erhalt einer Antwort ("PING"). Je schneller ein Rechner sich meldet, um so direkter ist die Verbindung, d.h. um so weniger Router sind in die Verbindung zwischengeschaltet. Auch hier kann eine schnelle Antwort als hohe Güte von einer langsameren Antwort unterschieden werden. Gerade bei einer Interaktion mit Anwendungen, die auf einem entfernten Rechner ablaufen, ist die Verzögerung von entscheidender Bedeutung.
c) Jitter (Delay-Schwankungen):
   Gleiches wie für die Verzögerung gilt auch für die Schwankungen in der Verzögerung. Will man mit hoher Sicherheit eine geringe Verzögerung bedarf es entsprechend eines niedrigen Jitters verbunden mit einem niedrigen Delay.

Hierbei sei angemerkt, daß in den obigen Fällen pauschal zwischen gut und schlecht (Verbindung, Delay, Jitter) unterschieden wird. Natürlich kann auch eine Staffelung in weitaus feinerem Maße erfolgen, so können z.B. unterschiedliche Klassen für das jeweilige Dienstgütemerkmal vergeben werden, wobei jede Klassen jeweils eine bestimmte Güte gewährleistet. Diese Klassen können mit unterschiedlichen Kosten für den Benutzer belegt sein.

Ausführungsbeispiele der Erfindung werden nachfolgend anhand der Zeichnung dargestellt und erläutert.

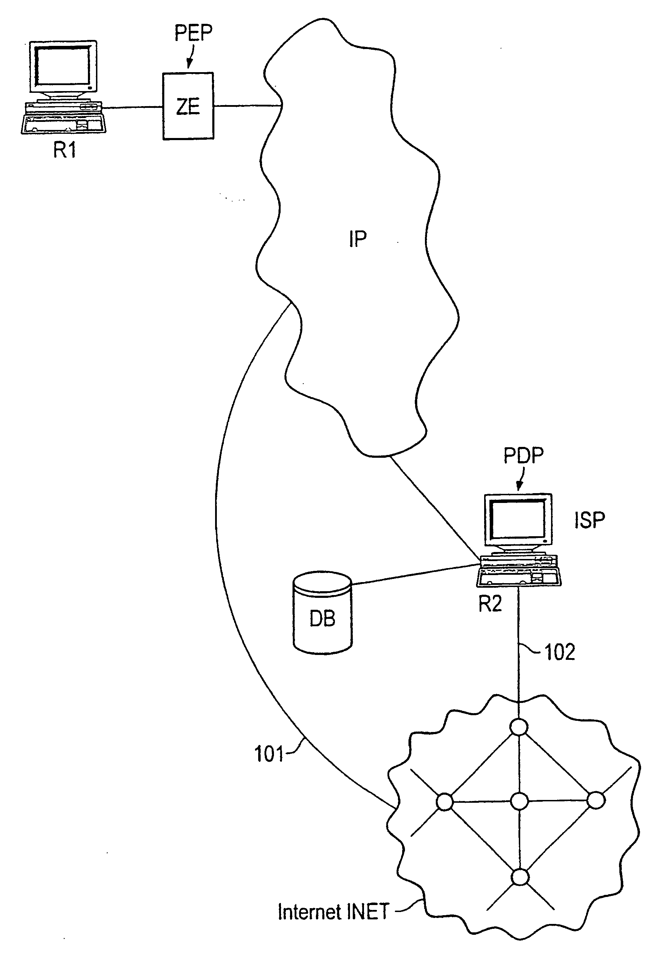

Es zeigt
- Fig.1: ein Kommunikationsnetz.

In **Fig.1** ist ein Kommunikationsnetz dargestellt. Das Kommunikationsnetz umfaßt einen Rechner R1, an den eine Zugangseinheit ZE angeschlossen ist. Die Zugangseinheit ZE ist als eigenständiges Gerat ausgeführt.

Dienstgütemerkmale fur die Verbindung ins bzw. im Internet INET werden über eine IP-Verbindung (IP = Internet Protokoll) zwischen Zugangseinheit ZE und einem Rechner R2, der für den Diensteanbieter (ISP = internet Service Provider) steht, ausgetauscht. Der Rechner R2 bedient sich einer Datenbank DB zur Ermittlung der für den Rechner R1 aktuell zulässigen bzw. erforderlichen Dienstgütemerkmale. Gegebenenfalls übermittelt der Rechner R2 diese Parameter an die Zugangseinheit ZE. Der Rechner R2 dient in diesem Szenario als Entscheidungspunkt über die Dienstgütemerkmale innerhalb des Kommunikationsnetzes (PDP = Policy Decision Point). Die Zugangseinheit ZE ist für Durchsetzung bzw. Überwachung der Dienstgütemerkmale zuständig (PEP = Policy Enforcement Point).

Der Rechner R1 greift auf das Internet INET entweder direkt (siehe Verbindung 101) oder über den Diensteanbieter ISP (siehe Verbindung 102) zu. Dabei wird für ihn unsichtbar sichergestellt, daß die geeigneten bzw. vereinbarten Dienstgütemerkmale genutzt werden. Will der Benutzer an dem Rechner R1 beispielsweise Bildtelefonie über Internet nutzen, so kann damit automatisiert eine höhere Bandbreite zur Verfügung gestellt werden, sofern dies in den Vereinbarungen mit dem Diensteanbieter ISP enthalten ist. Haben sich der Benutzer und der Diensteanbieter über ein bestimmtes Kontingent an Daten mit hoher Bandbreite geeinigt, so stellt die Zugangseinheit bei Überschreiten dieses Kontingentes sicher, daß nurmehr eine niedrigere Bandbreite (anderes Dienstgütemerkmal) genutzt wird.

Weiterhin kann transparent in der Zugangseinheit ZE eine Umsetzung in ein geeignetes Protokoll erfolgen, das u.U. nicht von dem Rechner R1 unterstützt wird. Eine Auswahl bzw. eine Adaption an bestimmte Protokollformate erfolgt zweckmäßig über die Kommunikation zwischen Zugangseinheit ZE und Diensteanbieter ISP.

Insbesondere die Verbindung zu dem Diensteanbieter ISP bzw. ins Internet INET von dem Rechner R1 über die Zugangseinheit ZE aus kann auf unterschiedliche Arten erfolgen (angedeutet in Fig.1 durch das Internet Protokoll IP). Ist der Rechner R1 Teil eines Local Area Networks (LAN), so kann direkt von der Zugangseinheit ZE eine IP-Verbindung zu dem Diensteanbieter ISP aufgebaut werden. Steht anstelle des LAN eine Telefonleitung zur Verfügung, so muß mittels Modems ein geeigneter Protokollstack benutzt werden, auf dem die IP-Verbindung eingerichtet werden kann. Die unteren Schichten des Protokollstacks sind in Fig.1 nicht detailliert aufgezeigt, es wird vielmehr davon ausgegangen, daß eine logische IP-Verbindung zwischen dem Rechner R1 bzw. der Zugangseinheit ZE und dem Diensteanbieter ISP bzw. dem Internet INET zustande kommt, unabhängig von der zugrundeliegenden Verbindungsart (Telefon, LAN, GSM, o.ä.).

Alternativ können innerhalb der IP-Verbindung mehrere Diensteanbieter angeordnet sein; die Funktionalität der Bereitstellung der Diensgütemerkmale geschieht zwischen dem Rechner R1 und dem Rechner R2, der seinerseits als Diensteanbieter ISP auf eine Verbindung zu anderen Diensteanbietern zurückgreifen kann.

## Patentansprüche

1. Kommunikationssystem,
bei dem ein erster Rechner (R1) vorgesehen ist, der an einem Netzwerk angeschlossen ist,
**dadurch gekennzeichnet,**
**dass** der erste Rechner eine Zugangseinheit (ZE) aufweist, anhand derer vorgegebene Dienstgütemerkmale für eine Interaktion mit dem Netzwerk bestimmt sind
und **dass** ein zweiter Rechner (R2) vorgesehen ist, der an das Netzwerk angeschlossen ist und der so ausgelegt ist, dass er die Dienstgütemerkmale der Zugangseinheit administriert.

2. Kommunikationssystem nach Anspruch 1,
bei dem das Netzwerk das Internet (INET) ist.

3. Kommunikationssystem nach Anspruch 1 oder 2,
bei dem die Zugangseinheit ausgeführt ist als:
a) ein eigenständiges Gerät;
b) eine Einschubvorrichtung für den ersten Rechner;
c) eine Softwarelösung für den ersten Rechner.

4. Kommunikationssystem nach einem der vorhergehenden Ansprüche,
bei dem der zweite Rechner einem Diensteanbieter zugeordnet ist.

5. Kommunikationssystem nach einem der vorhergehenden Ansprüche,
bei dem die Zugangseinheit derart ausgelegt ist, dass die Dienstgütemerkmale dynamisch abgerufen werden.

6. Kommunikationssystem nach einem der vorhergehenden Ansprüche,
bei dem die Zugangseinheit derart ausgelegt ist, dass eine Umsetzung von einem ersten Protokoll in ein zweites Protokoll erfolgt.

## Claims

1. Communications system,
in which a first computer (R1) is provided, which is connected to a network,
**characterized**
**in that** the first computer has an access unit (ZE) which is used to determine predetermined quality of service features for interaction with the network,
and **in that** a second computer (R2) is provided, which is connected to the network and is designed such that it administers the quality of service features of the access unit.

2. Communications system according to Claim 1,
in which the network is the Internet (INET).

3. Communications system according to Claim 1 or 2,
in which the access unit is embodied as:
a) an autonomous device;
b) a plug-in device for the first computer;
c) a software solution for the first computer.

4. Communications system according to one of the preceding claims,
in which the second computer is assigned to a service provider.

5. Communications system according to one of the preceding claims,
in which the access unit is designed in such a way that the quality of service features are called up dynamically.

6. Communication system according to one of the preceding claims,
in which the access unit is designed in such a way that conversion from a first protocol to a second protocol is effected.

## Revendications

1. Système de communication,
dans lequel est prévu un premier ordinateur (R1), qui est connecté à un réseau,
**caractérisé en ce**
**que** le premier ordinateur comprend une unité d'accès (ZE), à l'aide de laquelle des caractéristiques de qualité de service prédéfinies sont déterminées pour une interaction avec le réseau et en ce que un second ordinateur (R2) est prévu qui est connecté au réseau et qui est conçu de manière à administrer les caractéristiques de qualité de service de l'unité d'accès.

2. Système de communication selon la revendication 1,
dans lequel le réseau est l'Internet (INET).

3. Système de communication selon la revendication 1 ou 2,
dans lequel l'unité d'accès est conçue comme :
a) un appareil autonome ;
b) un dispositif à tiroir pour le premier ordinateur ;
c) une solution logicielle pour le premier ordinateur.

4. Système de communication selon l'une des revendications précédentes,
dans lequel le second ordinateur est affecté à un fournisseur de services.

5. Système de communication selon l'une des revendications précédentes,
dans lequel l'unité d'accès est conçue de manière à permettre d'appeler dynamiquement les caractéristiques de qualité de service.

6. Système de communication selon l'une des revendications précédentes,
dans lequel l'unité d'accès est conçue de manière à permettre la conversion d'un premier protocole en un second protocole.
